# EUROPÄISCHE PATENTANMELDUNG

(11) **EP 2 893 983 A1**
(43) Veröffentlichungstag der Anmeldung: **15.07.2015**
(21) Anmeldenummer: 15150257.2
(22) Anmeldetag: 07.01.2015
(51) Int. Cl.: B05B 11/00, F16K 15/14

(54) **Druckbetätigtes Ventil und Flüssigkeitsspender mit einem solchen Ventil**

(30) Priorität: 08.01.2014 DE 102014200155
(71) Anmelder: Aptar Radolfzell GmbH, 78315 Radolfzell (DE)
(72) Erfinder: Baumann, Tobias, 78244 Gottmadingen-Randegg (DE)
(74) Vertreter: Patentanwälte Ruff, Wilhelm, Beier, Dauster & Partner

(57) **Zusammenfassung**

1. Druckabhängig öffnendes Ventil und Spender mit einem solchen.
2.1. Bekannt sind druckabhängig öffnende Ventile (60) zur Steuerung des Durchflusses eines Mediums in einer Strömungsrichtung (3) mit einer Ventilbohrung (50), die eine Ventileingangsseite (10) mit einer Ventilausgangsseite (30) verbinden. Ein solches Ventil umfasst eine umlaufende und nach innen weisende Dichtkante (52) an einer Innenseite der Ventilbohrung (50) und einen Ventilkörper (60), der in Abhängigkeit eines Differenzdrucks zwischen der Ventileingangsseite und der Ventilausgangsseite die Ventilbohrung öffnet oder schließt.
2.2. Es wird vorgeschlagen, den Ventilkörper (62) als verformbarer Hohlkörper (62) mit einem Innenraum (61) und mit einer Außenseite (62a) zur dichtenden Anlage an der Dichtkante auszubilden, wobei der Innenraum (61) kommunizierend mit der Ventilausgangsseite (30) verbunden ist und der Ventilkörper (62) sich von der Ventilausgangsseite (30) in die Ventilbohrung (50) erstreckt. Es wird weiterhin auch ein Spender mit einem solchen Ventil vorgeschlagen.
2.3. Verwendung des Ventils insbesondere als Einlassventil in eine volumetrisch veränderliche Pumpkammer es vorzugsweise kosmetischen Spenders.

## Beschreibung

### ANWENDUNGSGEBIET UND STAND DER TECHNIK

Die Erfindung betrifft ein druckabhängig öffnendes Ventil zur Steuerung des Durchflusses eines Mediums in einer Strömungsrichtung mit einer Ventilbohrung, die eine Ventileingangsseite mit einer Ventilausgangsseite verbindet, mit einer umlaufenden und nach innen weisenden Dichtkante an einer Innenseite der Ventilbohrung und mit einem Ventilkörper, der in Abhängigkeit eines Differenzdrucks zwischen der Ventileingangsseite und der Ventilausgangsseite die Ventilbohrung öffnet oder schließt.

Gattungsgemäße Ventile finden in vielerlei Kontext Verwendung, wobei vorliegend die technische Verwendung in einem pharmazeutischen oder kosmetischen Spender zur Abgabe pharmazeutischer oder kosmetischer Medien im Vordergrund steht. Solche druckabhängig öffnenden Ventile werden im Kontext dieser Spender verwendet, um eine Pumpkammer einer Pumpeinrichtung phasenweise mit einem Flüssigkeitsspeicher zu verbinden oder von diesem zu trennen. Sie werden auch verwendet, um die Pumpkammer mit einer Umgebung, in die die Flüssigkeit ausgetragen werden soll, phasenweise zu verbinden oder zu trennen.

Eine Vielzahl heute üblicher pharmazeutischer oder kosmetischer Spender verfügt über mindestens zwei derartige Ventile, die eingangs und ausgangs der Pumpkammer angeordnet sind und zu dem folgenden Verhalten des Spenders führen. Ist die Pumpkammer vollständig mit Flüssigkeit gefüllt, wird ihr Volumen durch insbesondere manuelle Betätigung des Spenders und damit einhergehenden Hubbewegung reduziert, wobei das eingangsseitige Ventil aufgrund des entstehenden Überdrucks in der Pumpkammer schließt, während das ausgangsseitige Ventil öffnet, so dass die Flüssigkeit in eine Umgebung abgegeben werden kann. Nach Beendigung dieser Hubbewegung folgt ein Rückhub, der einen Unterdruck in der Pumpkammer verursacht. Durch diesen Unterdruck wird das ausgangsseitige Ventil geschlossen und das eingangsseitige Ventil geöffnet, so dass Flüssigkeit aus dem Flüssigkeitsspeicher in die Pumpkammer eingesogen werden kann.

Es existiert eine Vielzahl von Bauformen solche Ventile betreffend. Bekannt sind beispielsweise Ventile mit einem kugelförmigen Ventilkörper, der mit einem rotationssymmetrischen Ventilsitz abdichtend zusammenwirken kann, wobei fallweise zusätzlich eine Federeinrichtung vorgesehen ist, um den Ventilkörper gegen den Ventilsitz zu drücken.

Da die Spender, bei denen gattungsgemäße Ventile Verwendung finden, häufig aufgrund ihres Charakters als Einwegverpackung kostengünstig hergestellt werden können müssen, besteht ein Bedarf nach einfachen und zuverlässig wirkenden Ventilen. Eine bekannte Möglichkeit zur Herstellung eines solchen Ventils sieht vor, dass in einem elastischen Wandungsbauteil, welches eingangsseitig oder ausgangsseitig der Pumpkammer vorgesehen ist, eine einstückig damit verbundene Ventilklappe angebracht ist, die in Abhängigkeit der Druckdifferenz beidseits der Ventilklappe öffnet oder schließt.

### AUFGABE UND LÖSUNG

Die Aufgabe der Erfindung besteht darin, eine alternative Gestaltung eines Ventils zur Verfügung zu stellen, welches die Eigenschaften geringer Herstellungskosten mit einer hohen Zuverlässigkeit verbindet.

Erfindungsgemäß wird dies durch ein gattungsgemäßes Ventil ermöglicht, welches erfindungsgemäß dahingehend weitergebildet ist, dass der Ventilkörper als verformbarer Hohlkörper mit einem Innenraum einerseits und mit einer Außenseite zur dichtenden Anlage an der Dichtkante andererseits ausgebildet ist. Dabei ist dieser Innenraum kommunizierend mit der Ventilausgangsseite verbunden. Der Ventilkörper erstreckt sich dabei von der Ventilausgangsseite in die Ventilbohrung hinein.

Bei einem erfindungsgemäßen Ventil ist vorgesehen, dass der zumindest abschnittsweise hohl ausgebildete Ventilkörper sich bestimmungsgemäß in Abhängigkeit der Druckdifferenz zwischen der Ventileingangsseite und der Ventilausgangsseite verformt, insbesondere aufweitet und zusammenzieht, und abhängig von seinem Verformungszustand ein Öffnen und ein Schließen des Ventils verursacht. Durch die kommunizierende Verbindung des Hohlkörperinnenraums mit der Ventilausgangsseite kann das auf der Ventilausgangsseite vorhandene Medium in den Ventilkörper hineinströmen und im Falle des Überdrucks auf der Ventilausgangsseite diesen so aufweiten, dass sich das Ventil schließt. Besteht auf der Ventileingangsseite ein Überdruck, so wird der Ventilkörper unter Verringerung des Volumens dieses Innenraums zusammengedrückt, so dass er das Ventil öffnet.

Die Dichtkante, an der der Ventilkörper bestimmungsgemäß bei geschlossenem Ventil anliegt, muss nicht zwingend gegenüber dem Innendurchmesser der Ventilbohrung in an die Dichtkante anschließenden Bereichen erhaben sein. Als vorteilhaft wird es jedoch angesehen, wenn die Ventilbohrung an der Dichtkante einen geringeren Innendurchmesser gegenüber benachbarten Bereichen aufweist, sofern auch diese benachbarten Bereiche, bezogen auf die Durchströmungsrichtung, noch auf Höhe des Ventilkörpers liegen, da das Zusammendrücken des Ventilkörpers zum Öffnen des Ventils in einem solchen Fall durch eine radiale Kraftbeaufschlagung des Ventilkörpers in Folge des Mediendrucks auf der Eingangsseite verursacht werden kann.

Es wird weiterhin als vorteilhaft angesehen, wenn der Ventilkörper bezogen auf die Durchströmungsrichtung relativ zur Dichtkante derart angeordnet ist, dass sich der Innenraum des Ventilkörpers zumindest bis auf Höhe der Dichtkante erstreckt. Hierdurch wird erreicht, dass auch die Schließbewegung durch Aufweitung des Ventilkörpers durch eine im Wesentlichen radial nach außen wirkende Kraft in Folge des Mediendrucks auf der Ausgangsseite und damit im Hohlraum erzielt wird. Ein besonders gutes Dichten des geschlossenen Ventils wird hierdurch erreicht.

Der Ventilkörper ist systembedingt als verformbarer Hohlkörper ausgebildet. Er kann bei einer nicht bevorzugten Ausgestaltung unelastisch ausgebildet sein, so dass er bei Druckgleichheit auf der Ventileingangsseite und Ventilausgangsseite in einer zuvor angenommenen Form verbleibt. Als bevorzugt wird es angesehen, wenn der Ventilkörper aus einem elastischen Material wie Gummi oder dergleichen besteht, so dass er im genannten Zustand fehlenden Differenzdrucks oder bei sehr geringem Differenzdruck eine definierte Stellung einnimmt. Insbesondere ist dabei von Vorteil, wenn der Ventilkörper derart ausgestaltet ist, dass er bei Abwesenheit einer Druckdifferenz zwischen Ventileingangsseite und Ventilausgangsseite eine Außenform aufweist, die einen Durchmesser im Bereich der Dichtkante aufweist, der gleich groß oder größer als der Innendurchmesser der Dichtkante ist. Bei einer solchen Gestaltung ist der Normalzustand des Ventilkörpers somit ein Zustand, in dem das Ventil geschlossen ist. Erst ein ausreichender Überdruck auf der Ventileingangsseite führt zur Verformung des Ventilkörpers in Richtung einer Verkleinerung desselben und damit zum Öffnen des Ventils.

Grundsätzlich ist alternativ jedoch auch eine Gestaltung möglich, bei der bei Abwesenheit einer Druckdifferenz der Ventilkörper eine Form aufweist, bei der ein Durchmesser im Bereich der Dichtkante kleiner als der Innendurchmesser der Dichtkante ist. Ein solcher Ventilkörper führt somit zu einem geöffneten Ventil, sofern nicht ein ausreichender Überdruck auf der Ventilausgangsseite gegeben ist. Erst dieser Druck weitet den Ventilkörper so auf, dass das Ventil schließt. Entfällt der Überdruck oder sinkt er zumindest unter das zur Verformung des Ventilkörpers erforderliche Maß, so trennen sich die Außenseite des Ventilkörpers und die Dichtkante wieder voneinander und das Ventil öffnet.

Zur Festlegung des Ventilkörpers relativ zur Ventilbohrung ist vorzugsweise vorgesehen, dass der Ventilkörper einstückig mit einem Haltebereich verbunden ist, der der Festlegung des Ventilkörpers dient. Dieser Haltebereich kann insbesondere in Art eines Rings ausgebildet sein, welcher mit dem offenen Hohlkörper des Ventilkörpers verbunden ist, wobei im Haltebereich Durchbrechungen vorzusehen sind, durch die das Medium hindurchströmen kann.

Auf diese Weise ist eine einfache Festlegung des als Hohlkörper ausgebildeten Ventilkörpers möglich.

Die Erfindung betrifft darüber hinaus auch einen Spender zum Austrag von flüssigen oder pastösen Medien, insbesondere Medien kosmetischer oder pharmazeutischer Natur. Dieser Spender verfügt über ein druckabhängiges öffnendes Ventil, welches nach oben beschriebener Art ausgestaltet ist. Wie eingangs bereits erläutert, kann ein solches Ventil bei einem Spender genannter Art insbesondere als Eingangsventil oder Ausgangsventil einer Pumpkammer Verwendung finden. Es sind jedoch auch weitere Verwendungsmöglichkeiten denkbar, so insbesondere als Druckausgleichsventil in einem Belüftungskanal, durch den der Flüssigkeitsspeicher des Spenders nach Austrag von Flüssigkeit Luft aus seiner Umgebung ansaugt. Bei letztgenannter Verwendung würde der beim Austrag im Flüssigkeitsspeicher entstehende Unterdruck die volumetrische Verkleinerung des Ventilkörpers und somit ein Öffnen des Lufteinlassventils bewirken.

Bei einer Weiterbildung des genannten Spenders weist dieser eine Pumpkammer auf, die zumindest abschnittsweise durch in eine verformbare Wandung begrenzt wird. Diese verformbare Wandung kann insbesondere eine zwischen zwei zueinander verlagerbaren Stirnwandungen sich erstreckende umlaufend geschlossene schlauchartige Außenwandung sein, die die Vergrößerung und Verkleinerung des Pumpkammervolumens gestaltet. Sie kann beispielsweise in Art eines Faltenbalgs ausgebildet sein. Wenn ein erfindungsgemäßes Ventil bei einem erfindungsgemäßen Spender Verwendung findet, der eine solche Pumpkammerwandung aufweist, so ist es von Vorteil, wenn diese Pumpkammerwandung einstückig mit dem Ventilkörper ausgebildet ist. Es ist somit möglich, die Zahl der erforderlichen Hauptbauteile der Pumpeinrichtung eines solchen Spenders auf nur drei Bauteile zu begrenzen, von denen zwei vergleichsweise starre Bauteile zum Zwecke eines Austragsvorgangs gegeneinander verlagerbar sind und von denen das dritte Bauteil ein vorzugsweise elastisch verformbares Bauteil ist, welches die Pumpkammerwandung und den Ventilkörper des Einlass- und Auslassventils bildet.

Die Verwendung eines Ventils der beschriebenen Art ist insbesondere im Kontext eines solchen Bauteils vorteilhaft, welches neben Abschnitten des Ventils auch die Pumpkammerwandung oder einen anderen hinsichtlich seiner Größe die Abschnitte des Ventils wesentlich überragenden Teilabschnitt aufweist.

Bei solchen vergleichsweise großen Bauteilen ist die Gefahr in der Praxis groß, dass sich das Bauteil im Zuge der Herstellung oder des nachfolgenden Abkühlens verzieht. Hierdurch bedingt ist die Lage der Abschnitte des Ventils im eingebauten Zustand nur recht ungenau vorherzusagen. Der beschriebene Ventiltyp eignet sich hier besonders gut, da er ein Art Selbstzentrierung bietet. Selbst wenn der Ventilkörper bei geöffnetem Ventil exzentrisch in der Bohrung angeordnet ist, führt eine druckbedingte Aufweitung des Ventilkörpers bei gleichzeitiger radialer Lageveränderung des Ventilkörpers zu einem sicheren Verschießen der Bohrung. Eine durch Verzug oder andere Toleranzen bedingte Beabstandung des Ventilkörpers vom Ventilsitz mit der Folge eines nicht zuverlässigen Verschließens des Ventils ist bei der Verwendung des beschriebenen Ventiltyps nicht zu befürchten.

Die Vorteilhaftigkeit des beschriebenen Ventiltyps bei Verwendung eines einstückigen Bauteils mit Pumpkammerwandung und Ventilabschnitt ist umso größer, je weiter ein Haltebereich in Art eines Festlegungsbereichs oder Zentrierungsbereichs in radialer Hinsicht vom Ventilkörper beabstandet ist, da durch die Beabstandung der Gefahr des Verzuges besonders groß wird.

Weiterhin ist die Verwendung des beschriebenen Ventiltyps im Kontext des beschriebenen einstückigen Bauteils besonders dann von Vorteil, wenn zwischen einem außenliegenden Haltebereich in Art eines Festlegungsbereichs oder Zentrierungsbereichs des Bauteils und dem innenliegenden Ventilkörper Durchbrechungen für die Flüssigkeit vorgesehen sind. Diese Durchbrechungen gehen mit zwischen ihnen verbleibenden Materialbrücken einher, an denen die Gefahr des Materialverzugs besonders groß ist.

### KURZBESCHREIBUNG DER ZEICHNUNGEN

Weitere Aspekte und Vorteile der Erfindung ergeben sich aus den Ansprüchen sowie der nachfolgenden Beschreibung eines bevorzugten Ausführungsbeispiels der Erfindung, welches anhand der Figuren erläutert wird. Dabei zeigen:
- Fig. 1: einen erfindungsgemäßen Spender mit einem erfindungsgemäßen Ventil bei geschlossenem Ventil und
- Fig. 2: den Spender der Fig. 1 bei geöffnetem Einlassventil.

### DETAILLIERTE BESCHREIBUNG DES AUSFÜHRUNGSBEISPIELS

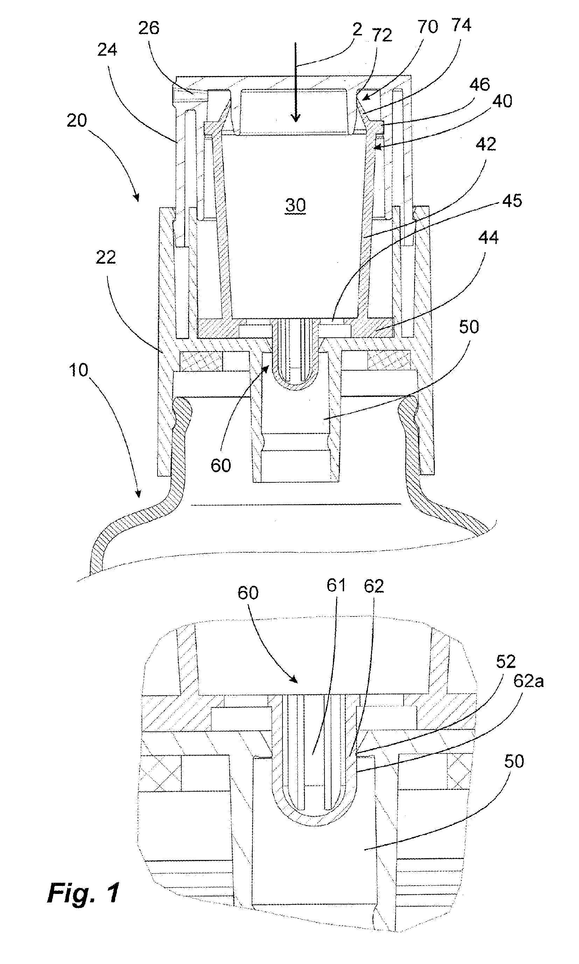

Fig. 1 zeigt einen erfindungsgemäßen Spender mit im Wesentlichen rotationssymmetrischem Aufbau in einer geschnittenen Ansicht. Die untere Darstellung der Fig. 1 zeigt in vergrößerter Weise ein Einlassventil des Spenders. Der Spender verfügt über einen flaschenartigen Flüssigkeitsspeicher 10, auf den ein Austragkopf 20 aufgerastet ist. Dieser Austragkopf 20 wiederum verfügt über eine Basis 22 und eine gegenüber der Basis 22 niederdrückbare Betätigungshandhabe 24 mit einer Austragöffnung 26.

In einem Zwischenbereich zwischen der Betätigungshandhabe 24 und der Basis 22 ist eine Pumpkammer 30 vorgesehen, welche an ihrem unteren Stirnende durch die Basis 22 und an ihrem oberen Stirnende durch den Betätigungsdrücker 24 begrenzt wird. Die umlaufende Seitenwandung 42 der Pumpkammer 30 wird durch ein Bauteil 40 aus einem elastischen Material gebildet, welches in einem Festlegungsbereich 44 an der Basis 22 befestigt ist, und in einem Festlegungsbereich 46 am Betätigungsdrücker befestigt ist. Durch die Verformbarkeit des Bauteils 40 gestattet dies eine Reduzierung des Innenvolumens der Pumpkammer 30 durch Verlagerung des Betätigungsdrückers 24 in Richtung des Pfeils 2 auf die Basis 22 zu. Die Seitenwandung ist in den Figuren vereinfacht darstellt. Es können auch komplexere Formgebungen wie beispielsweise die eines Faltenbalges hier realisiert sein.

Die Basis 22 stellt einen Zuflusskanal 50 zur Verfügung, der die Pumpkammer 30 mit dem Flüssigkeitsspeicher 10 verbindet. Sowohl zwischen diesem Zuflusskanal 50 und der Pumpkammer 30, als auch zwischen der Pumpkammer 30 und der Austragöffnung 26 sind druckabhängig öffnende und schließende Ventile 60, 70 vorgesehen.

Das Auslassventil 70 wird durch eine ringförmige Dichtfläche 72 am Betätigungsdrücker 24 sowie eine daran im geschlossenen Zustand anliegende Ventillippe 74 gebildet, welche einstückiger Teil des Bauteils 40 ist.

Das Einlassventil 60 umfasst einen als Ventilkörper 62 agierenden Hohlkörper 62, der einseitig offen und hierdurch mit der Pumpkammer 30 kommunizierend verbunden ist. Dieser Ventilkörper 62 erstreckt sich von der Pumpkammer 30 aus in eine durch den Zuflusskanal 50 gebildete Ventilbohrung. Dabei erstreckt sich der Ventilkörper 62 an einer im Zuflusskanal 50 angeordneten und nach innen weisenden Dichtkante 52 vorbei, welche eine spitzwinkelige Außenkontur aufweist. Im in Fig. 1 dargestellten weitgehend entspannten Zustand des Ventilkörpers 62 liegt dieser mit seiner Außenseite 62a an dieser Dichtkante 52 an. Vorzugsweise hat der entspannte Ventilkörper 62 gegenüber dem Innendurchmesser im Bereich der Dichtkante 52 ein geringfügiges Übermaß, so dass eine zuverlässige Abdichtung an der Dichtkante 52 gewährleistet ist.

Der einstückige Charakter des Bauteils 40 mit der Seitenwandung 42 der Pumpkammer 30 und dem Haltebereich 44 führt dazu, dass produktionstechnisch die präzise Zentrierung des Ventilkörpers 62 alleine über seine Position am Gesamtbauteil nicht gewährleistet werden kann. Der spezielle Ventiltyp führt jedoch dazu, dass dies unproblematisch ist, da der Ventilkörper durch seine Anordnung im Zuflusskanal 50 zentriert wird.

Wenn der Betätigungsdrücker 24 ausgehend vom Zustand der Fig. 1 und bei mit Medium gefüllter Pumpkammer 30 in Richtung des Pfeils 2 hinabgedrückt wird, so wird die Seitenwandung 42 der Pumpkammer 30 zusammengedrückt und das Medium in der Pumpkammer 30 druckbeaufschlagt. Der gleiche Druck, der in der Pumpkammer 30 herrscht, herrscht auch im Hohlraum 61 des Ventilkörpers 62, so dass dessen Wandung mit großer Kraft radial gegen die Dichtkante 52 gedrückt wird. Das auf Seite der Pumpkammer 30 außenseitig am Ventilhohlkörper 62 und der Dichtkante 52 anliegende Medium kann daher nicht zurück in den Flüssigkeitsspeicher 10 entweichen. Der Druck in der Pumpkammer 30 führt daher stattdessen zu einem Öffnen des Auslassventils 70 durch eine Aufweitung der Ventillippe 74. Im Zuge des Hinabdrückens des Betätigungsdrückers 24 wird das Medium aus der Pumpkammer 30 somit durch das geöffnete Auslassventil 70 und die Austragöffnung 26 hindurch ausgetragen.

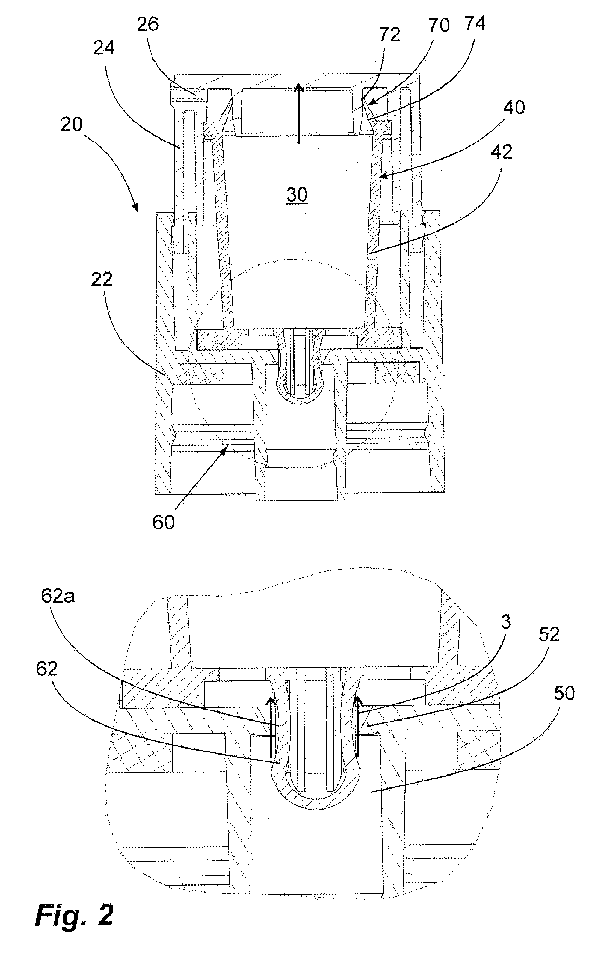

Wenn nach dem Austragvorgang der Betätigungsdrücker 24 losgelassen wird und durch die Seitenwandung 42 wieder nach oben gedrückt wird oder gar manuell zurück nach oben gezogen wird, so entfällt der Überdruck in der Pumpkammer 30 und die Dichtlippe 74 legt sich wieder an die Dichtfläche 72 an und schließt somit das Auslassventil 70. Mit Vergrößerung des Volumens der entleerten Pumpkammer 30 sinkt der Druck in der Pumpkammer 30 unter das Druckniveau im Flüssigkeitsspeicher 10. Dies führt dazu, dass in der in Fig. 2 dargestellten Weise ein Kollabieren des Ventilkörpers 62 des Einlassventils 60 in radialer Richtung erfolgt. Der Ventilkörper zieht sich zusammen, so dass sich seine Außenwandung 62a von der Dichtkante 52 löst, und somit eine kommunizierende Verbindung zwischen dem Flüssigkeitsspeicher 10 und der Pumpkammer 30 herstellt. Diese kommunizierende Verbindung führt dazu, dass nun Flüssigkeit aus dem Flüssigkeitsspeicher 10 angesaugt wird und in die Pumpkammer 30 gelangt, so dass diese wieder mit Medium gefüllt wird.

Erst wenn der Betätigungsdrücker 24 wieder seinen unbetätigten Ausgangszustand erreicht hat, entfällt der Unterdruck in der Pumpkammer 30 und das Einlassventil 60 nimmt wieder jenen Zustand ein, den es bei identischem Druck an der Innenseite und der Außenseite hat, nämlich den Zustand der Fig. 1, in dem die Außenseite 62a des Ventilhohlkörpers 62 an der Dichtkante 52 anliegt und das Einlassventil somit schließt.

## Patentansprüche

1. Druckabhängig öffnendes Ventil (60) zur Steuerung des Durchflusses eines Mediums in einer Strömungsrichtung (3) mit
- einer Ventilbohrung (50), die eine Ventileingangsseite (10) mit einer Ventilausgangsseite (30) verbindet,
- einer umlaufenden und nach innen weisenden Dichtkante (52) an einer Innenseite der Ventilbohrung (50) und
- einem Ventilkörper (60), der in Abhängigkeit eines Differenzdrucks zwischen der Ventileingangsseite und der Ventilausgangsseite die Ventilbohrung öffnet oder schließt,
**dadurch gekennzeichnet, dass**
- der Ventilkörper (62) als verformbarer Hohlkörper (62) mit einem Innenraum (61) und mit einer Außenseite (62a) zur dichtenden Anlage an der Dichtkante ausgebildet ist, wobei der Innenraum (61) kommunizierend mit der Ventilausgangsseite (30) verbunden ist und der Ventilkörper (62) sich von der Ventilausgangsseite in die Ventilbohrung (50) erstreckt.

2. Druckabhängig öffnendes Ventil (60) nach Anspruch 1,
**dadurch gekennzeichnet, dass**
der Ventilkörper (62) relativ zur Dichtkante (52) derart angeordnet ist, das der Innenraum (61) bezogen auf die Durchströmungsrichtung (3) auf Höhe der Dichtkante (52) der Ventilbohrung angeordnet ist.

3. Druckabhängig öffnendes Ventil (60) nach Anspruch 1 oder 2,
**dadurch gekennzeichnet, dass**
der Ventilkörper (62) aus einem elastischen Material besteht.

4. Druckabhängig öffnendes Ventil (60) nach einem der vorstehenden Ansprüche,
**dadurch gekennzeichnet, dass**
der Ventilkörper (62) bei Abwesenheit einer Druckdifferenz zwischen Ventileingangsseite und Ventilausgangsseite eine Außenform aufweist, die
- einen Durchmesser im Bereich der Dichtkante (52) aufweist, der gleich groß oder größer als ein Innendurchmesser der Dichtkante (52) ist oder
- einen Durchmesser im Bereich der Dichtkante aufweist, der kleiner als der Innendurchmesser der Dichtkante ist.

5. Druckabhängig öffnendes Ventil (60) nach einem der vorstehenden Ansprüchen,
**dadurch gekennzeichnet, dass**
der Ventilkörper (62) einstückig mit einem Haltebereich (44) verbunden ist, der zur Festlegung des Ventilkörpers (62) auf der Ventilausgangsseite oder der Ventileingangsseite dient, wobei der Haltebereich mit Durchbrechungen (45) für das Medium versehen ist.

6. Druckabhängig öffnendes Ventil (60) nach einem der vorstehenden Ansprüchen,
**dadurch gekennzeichnet, dass**
die Dichtkante (52) einen zum Ventilkörper hinweisenden Kontaktbereich zur Anlage der Außenseite (62a) des Ventilkörpers (62) aufweist, wobei ausgehend von diesem Kontaktbereich die Außenkontur der Dichtkante einen spitzen Winkel bildet.

7. Spender zum Austrag von flüssigen oder pastösen Medien mit einem druckabhängig öffnenden Ventil (60),
**dadurch gekennzeichnet, dass**
das Ventil (60) als druckabhängig öffnendes Ventil gemäß einem der vorstehenden Ansprüche ausgebildet ist.

8. Spender nach Anspruch 7,
**dadurch gekennzeichnet, dass**
das Ventil (60) als Eingangsventil (60) oder Ausgangsventil einer volumetrisch veränderlichen Pumpkammer (30) ausgebildet ist.

9. Spender nach Anspruch 8,
**dadurch gekennzeichnet, dass**
die Pumpkammer (30) zumindest abschnittsweise durch eine verformbare Wandung (42) begrenzt wird, wobei diese verformbare Wandung (42) einstückig mit dem Ventilkörper (62) ausgebildet ist.
